# EUROPEAN PATENT SPECIFICATION

(11) **EP 2 494 166 B1**
(45) Date of publication and mention of the grant of the patent: **25.03.2015**
(21) Application number: 10752482.9
(22) Date of filing: 30.08.2010
(51) Int. Cl.: F02C 6/16, F02C 1/02, F02C 1/04

(54) **ADIABATIC COMPRESSED AIR ENERGY STORAGE SYSTEM WITH MULTI-STAGE THERMAL ENERGY STORAGE**
ADIABATISCHES DRUCKLUFTSPEICHERKRAFTWERK MIT MEHRSTUFIGER WÄRMEENERGIESPEICHERUNG
SYSTÈME DE STOCKAGE ADIABATIQUE D'ÉNERGIE D'AIR COMPRIMÉ AVEC STOCKAGE D'ÉNERGIE THERMIQUE À MULTIPLES ÉTAGES

(30) Priority: 28.10.2009 US 607137
(43) Date of publication of application: 05.09.2012
(73) Proprietor: General Electric Company, Schenectady, NY 12345 (US)
(72) Inventor: FREUND, Sebastian, W., D-85748 Garching B. Muenchen (DE)
(74) Representative: Illingworth-Law, William Illingworth
(86) International application number: PCT/US2010/047094
(87) International publication number: WO 2011/056283

(56) References cited:
- DE-A1- 2 636 417
- DE-B- 1 247 751
- US-A- 5 537 822
- US-A1- 2009 158 740

## Description

### BACKGROUND OF THE INVENTION

Embodiments of the invention relate generally to compressed air energy storage (CAES) systems and, more particularly, to a multi-stage thermal energy storage (TES) system in an adiabatic CAES system.

Air compression and expansion systems are used in a multitude of industries for a variety of applications. For example, one such application is the use of air compression and expansion systems for storing energy. Compressed air energy storage (CAES) systems typically include a compression train having a plurality of compressors that compress intake air and provide the compressed intake air to a cavern, underground storage, or other compressed air storage component. The compressed air is then later used to drive turbines to produce electrical energy. During operation of the compression stage of a CAES system, the compressed intake air is typically cooled. During operation of the expansion stage, air is discharged from underground storage through heaters and turbines and expands such that the air exits the turbines at ambient pressure.

Typically, compressors and turbines in CAES systems are each connected to a generator/motor device through respective clutches, permitting operation either solely of the compressors or solely of the turbines during appropriate selected time periods. During off-peak periods of electricity demand in the power grid (i.e., nights and weekends), the compressor train is driven through its clutch by the generator/motor. In this scheme, the generator/motor functions as a motor, drawing power from a power grid. The compressed air is then cooled and delivered to underground storage. During peak demand periods, with the turbine clutch engaged, air is withdrawn from storage and then heated and expanded through a turbine train to provide power by driving the generator/motor. In this scheme, the generator/motor functions as a generator, providing power to a power grid, for example.

One specific type of CAES system that has been proposed is an adiabatic compressed air energy storage system (ACAES), in which thermal energy storage (TES) unit(s) are employed to cool the compressed air prior to storage in the cavern and to reheat the air when it is withdrawn from the cavern and supplied to the turbine train. ACAES systems thus allow for storing energy with higher efficiency than non-adiabatic systems, since the heat generated during the air compression is not disposed of but used subsequently to preheat the compressed air during discharge through a turbine.

Currently proposed ACAES system designs typically incorporate a single TES unit. The use of a single TES unit results in the TES unit being forced to operate at a high temperature and high pressure. For example, a single TES unit may reach operating temperatures as high as 650° Celsius and operate at a pressure of 60 bar. The high temperature, high pressure, and large duty of the TES unit pose engineering challenges with regard to material, thermal expansion, heat losses, size and mechanical stresses. The need to address these engineering challenges leads to increased cost and long development times and presents a steep market barrier.

Additionally, the use of a single TES unit also results in decreased efficiency of the ACAES system. That is, turbomachinery (i.e., compressors and turbines) forced to operate at a high temperature and a high pressure ratio has a lower efficiency, as compared to turbomachinery that operates at lower temperatures and pressure ratios. An arrangement where additional TES units are added between stages of the compressors and turbines functions to lower temperature and pressure ratios, thus helping increase the efficiency of the turbomachinery in the ACAES system.

An ACAES system implementing two TES units has been previously proposed see e.g. DE 26 36 417 A1, however, such an arrangement of two TES units still does not completely address the issues of temperature and pressure. That is, even with a reduction in temperature and pressure provided by the use of two TES units, the TES units are still forced to operate at temperatures around 500° Celsius. The presence of such high temperatures of operation remains a substantial barrier for implementing ACAES systems in commercial operation.

Therefore, it would be desirable to design a system and method that overcomes the aforementioned drawbacks.

### BRIEF DESCRIPTION OF THE INVENTION

Embodiments of the invention provide a multi-stage thermal energy storage (TES) system for cooling and heating air in an adiabatic compressed air energy storage (ACAES) system. The multi-stage TES system includes a plurality of TES units whose operating conditions can be switched or reversed between operation of the ACAES system in a compression mode and an expansion mode.

In accordance with one aspect of the invention, an adiabatic compressed air energy storage (ACAES) system operable in a compression mode to compress air and in an expansion mode to expand air is provided. The ACAES system includes a compressor system configured to compress air supplied thereto, with the compressor system further including a plurality of compressors and a compressor conduit fluidly connecting the plurality of compressors together and having an air inlet and an air outlet. The ACAES system also includes an air storage unit connected to the air outlet of the compressor conduit and configured to store compressed air received from the compressor system and a turbine system configured to expand compressed air supplied thereto from the air storage unit, with the turbine system further including a plurality of turbines and a turbine conduit fluidly connecting the plurality of turbines together and having an air inlet and an air outlet. The ACAES system also includes a plurality of thermal energy storage (TES) units configured to remove thermal energy from compressed air passing through the compressor conduit and return thermal energy to air passing through the turbine conduit, with each of the plurality of TES units being positioned on the compressor conduit along a length thereof between the air inlet and the air outlet of the compressor conduit and on the turbine conduit along a length thereof between the air inlet and the air outlet of the turbine conduit. The compressor conduit and the turbine conduit are arranged such that at least a portion of the plurality of TES units is configured to operate at a first pressure state during the compression mode of operation and at a second pressure state different from the first pressure state during the expansion mode of operation.

In accordance with another aspect of the invention, a method for adiabatic compressed air energy storage (ACAES) includes the steps of supplying air to a compressor system, the compressor system including a plurality of compressor units fluidly connected by a compressor conduit and compressing the air in the compressor system during a compression stage. The method also includes the steps of storing the compressed air in a compressed air storage unit, supplying the compressed air from the compressed air storage unit to a turbine system including a plurality of turbine units fluidly connected by a turbine conduit, and expanding the air in the turbine system during an expansion stage. The method further includes the step of passing the air through a plurality of thermal energy storage (TES) units connected to each of the compressor conduit and the turbine conduit during each of the compression stage and the expansion stage, the plurality of TES units spaced intermittently among the plurality of compressor units and the plurality of turbine units, to cool and heat the air as it passes through the respective compressor conduit and the turbine conduit. The air is routed through the plurality of TES units such that at least a portion of the plurality of TES units operate at a first pressure state during the compression stage and at a second pressure state different from the first pressure state during the expansion stage.

In accordance with another exemplary aspect, not being part of the invention, an ACAES system includes a compressor system configured to compress air supplied thereto and having a plurality of compressors and a compression path connecting the plurality of compressors and having an air inlet and an air outlet. The ACAES system also includes an air storage unit connected to the air outlet of the compression path and configured to store compressed air received from the compressor system and a turbine system configured to expand compressed air supplied thereto from the air storage unit, with the turbine system having a plurality of turbines and an expansion path connecting the plurality of turbines and having an air inlet and an air outlet. The ACAES system further includes a multi-stage thermal energy storage (TES) system configured to cool air passing through the compression path during a charging stage and heat air passing through the expansion path during a discharging stage, with the multi-stage TES system comprising a plurality of TES units each configured to operate in a different pressure state. The compression path and the expansion path are routed such that at least a portion of the plurality of TES units operate at a first pressure state during the charging stage and at a second pressure state different from the first pressure state during the discharging stage.

Various other features and advantages will be made apparent from the following detailed description and the drawings.

### BRIEF DESCRIPTION OF THE DRAWINGS

The drawings illustrate preferred embodiments presently contemplated for carrying out the invention.

In the drawings:
FIG. 1 is a block schematic diagram of an adiabatic compressed air energy storage (ACAES) system according to an embodiment of the present invention.
FIG. 2 is a block schematic diagram of an ACAES system according to an embodiment of the present invention.
FIG. 3 is a block schematic diagram of a thermal energy storage (TES) unit according to an embodiment of the invention.

### DETAILED DESCRIPTION

According to embodiments of the invention, a multi-stage thermal energy storage (TES) system is provided to cool and heat air in an adiabatic compressed air energy storage (ACAES) system. The multi-stage TES system includes a plurality of TES units whose operating conditions can be switched or reversed between operation of the ACAES system in a compression mode and an expansion mode.

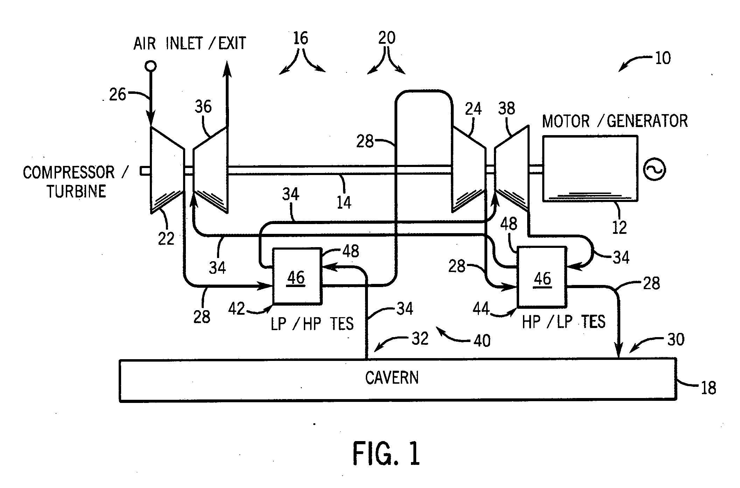

Referring to FIG. 1, a block schematic diagram of an adiabatic compressed air energy storage (ACAES) system 10 is shown according to an embodiment of the invention. ACAES system 10 includes a motor-generator unit 12 (which may be a combined unit or separate units), a driving shaft 14, a compression system or train 16, a compressed air storage volume or cavern 18, and a turbine system or train 20.

Motor-generator unit 12 is electrically connected to, for example, a baseload power generating plant (not shown) to receive power therefrom. Motor-generator unit 12 and drive shaft 14 are selectively coupled to compressor system 16 and turbine system 20 through clutches (not shown). Compressor system 16 is coupled to motor-generator unit 12 and drive shaft 14 during a compression mode of operation, while turbine system 20 is decoupled from the motor-generator unit 12 and drive shaft 14. During an expansion mode of operation, turbine system 20 is coupled to motor-generator unit 12 and drive shaft 14, while compressor system 16 is decoupled from the motor-generator unit 12 and drive shaft 14.

According to an embodiment of the invention, motor-generator unit 12 drives drive shaft 14 during the compression mode of operation (i.e., compression stage). In turn, drive shaft 14 drives compressor system 16, which includes a low pressure compressor 22 and a high pressure compressor 24, such that a quantity of ambient air enters an ambient air intake 26 (i.e., inlet) and is compressed by the compressor system 16. Low pressure compressor 22 is coupled to high pressure compressor 24 via a compression path 28 (i.e., compressor conduit). According to the present embodiment, low pressure compressor 22 compresses the ambient air. The compressed ambient air then passes along compression path 28 to high pressure compressor 24, where the ambient air is further compressed before exiting the compression path 28 at a compression path outlet 30 and being transferred to cavern 18.

After compressed air is stored in cavern 18, compressed air can be allowed to enter an inlet 32 of an expansion path 34 (i.e., turbine conduit) during the expansion mode of operation (i.e., expansion stage). The compressed air proceeds down the expansion path 34 to turbine system 20, which includes a low pressure turbine 36 and a high pressure turbine 38. Due to the configuration of turbine system 20, the compressed air is allowed to expand as it passes therethrough; thus, causing rotation of turbines 36, 38 of turbine system 20 so as to facilitate power generation. The rotation of turbine system 20 causes drive shaft 14 to rotate. In turn, drive shaft 14 drives motor-generator unit 12, causing the unit to function as a generator to produce electricity.

As shown in FIG. 1, ACAES system 10 also includes a multi-stage thermal energy storage (TES) system 40 configured to cool and heat the air passing through the compression and expansion paths 28, 34 as it is being compressed/expanded by the compressor and turbine systems 16, 20. The multi-stage TES system 40 is comprised of a plurality of individual TES units 42, 44 that may take on a variety of forms. Each TES unit generally has two main elements, a thermal fill 46 and a containment vessel 48. The thermal fill 46 is a heat storage material of sufficient quantity to store the heat of compression generated during the compression cycle. The thermal fill material 46 is typically cycled at least once a day. The containment vessel 48 supports the thermal fill 46 and, depending on the design, contains the operating pressure. According to an embodiment of the invention, the TES units 42, 44 may be of the indirect type in which cycled air transfers heat to and from the thermal fill 46 without direct contact by using a heat exchanger (not shown). Such a device permits the use of a wide variety of thermal fill materials, such as thermal oil or molten salt. According to another embodiment of the invention, the TES units 42, 44 may be of the direct type in which solid material such as pebbles are in direct contact with the compressed air as it is being cycled, such as a pebble bed.

In operation, the multi-stage TES system 40 functions to remove heat from the compressed air during a compression or "charging" stage/mode of operation of ACAES system 10. As air is compressed by compressor system 16 and as it passes along compression path 28 to cavern 18, multi-stage TES system 40 cools the compressed air. That is, before the compressed air is stored in cavern 18, it is passed through multi-stage TES system 40 to remove heat from the compressed air prior to storage in the cavern, so as to protect the integrity thereof. The heat is stored by multi-stage TES system 40, and is later conveyed back to the compressed air during an expansion or "discharging" stage/mode of operation of ACAES system 10. As the compressed air is released from cavern 18 and passes through expansion path 34 to be expanded by turbine system 20, the air is heated as it passes back through multi-stage TES system 40.

According to the embodiment of FIG. 1, the multi-stage TES system 40 includes a first TES unit 42 and a second TES unit 44 that are positioned intermittently along the compression path 28 and the expansion path 34 to provide cooling/heating to air passing therethrough. According to an exemplary embodiment, the compression path 28 is arranged or routed such that air is first directed to first TES unit 42 and is then subsequently directed to second TES unit 44. Air is brought into compression path 28 through inlet 26 and provided to low pressure compressor 22. Low pressure compressor 22 compresses the air to a first pressure level (i.e., a "low" pressure) and the air is then routed through compression path 28 to first TES unit 42, where the air is cooled. The air then continues through compression path 28 to high pressure compressor 24, where the air is compressed to a second pressure level (i.e., a "high" pressure). The air is then routed through compression path 28 to second TES unit 44, where the air is again cooled before exiting compression path 28 through outlet 30 for storage in cavern 18. Compression path 28 is thus routed such that first TES unit 42 is positioned on compression path 28 between low pressure compressor 22 and high pressure compressor 24 and such that second TES unit 44 is positioned on compression path 28 downstream of the high pressure compressor 24 to cool air compressed by the high pressure compressor.

According to an exemplary embodiment, the expansion path 34 is routed such that air is first directed to first TES unit 42 and is then subsequently directed to second TES unit 44. Air is brought into expansion path 34 through inlet 32 and provided to first TES unit 42, where the air is heated. The heated air is then passed through expansion path 34 to high pressure turbine 38, which expands the air. The air then continues through expansion path 34 and is directed to second TES unit 44, where the air is again heated before being passed along expansion path 34 to low pressure turbine 36. The air is then expanded again in low pressure turbine 36 and vented to the environment, for example.

According to the embodiment of ACAES system 10 shown in FIG. 1, expansion path 34 is thus routed/arranged so as to "reverse" the operation or function of the first and second TES units 42, 44. That is, the first TES unit 42 functions as a "low pressure TES unit" and the second TES unit 44 functions as a "high pressure TES unit" during the compression/charging mode of operation, based on routing of compression path 28. During the expansion/discharging mode of operation, the first TES unit 42 functions as a "high pressure TES unit" and the second TES unit 44 functions as a "low pressure TES unit," based on routing of expansion path 34.

The reversing of the operation/function of first and second TES units 42, 44 between the charging and discharging modes of operations results in a peak operating temperature of the TES units being reduced. For example, the operating temperature of first TES unit 42 may be approximately 325° Celsius and the operating temperature of second TES unit 44 may be approximately 310° Celsius, as compared to temperatures of 500° Celsius were the function of two TES units not reversed, or 650° Celsius were a single TES unit used.

The reversing of the operation/function of first and second TES units 42, 44 between the charging and discharging modes of operations also results in a reduced operating pressure in the compressor system 16. Operating pressures of the low and high pressure compressors 22, 24 may be 1.2 MPa (12 bar) and 0.5 MPa (5 bar), for example, as compared to 6 MPa (60 bar) in a single stage compressor system.

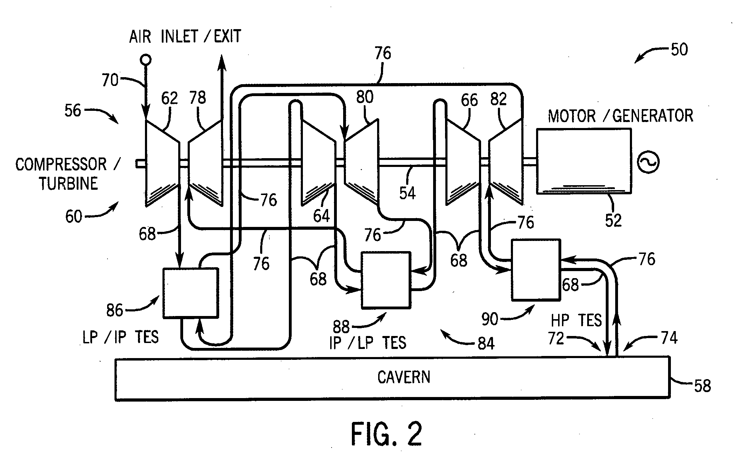

Referring now to FIG. 2, an ACAES system 50 is shown according to another embodiment of the invention. ACAES system 50 includes a motor-generator unit 52 (which may be a combined unit or separate units), a driving shaft 54, a compressor system or train 56, a compressed air storage volume 58, and a turbine system or train 60.

Compressor system 56 includes a low pressure compressor 62, an intermediate pressure compressor 64, and a high pressure compressor 66, along with a compression path 68 coupling the compressors and that includes an inlet 70 and an outlet 72. According to the present embodiment, low pressure compressor 62 compresses ambient air brought in through inlet 70. The compressed ambient air then passes along compression path 68 to intermediate pressure compressor 64, where the ambient air is further compressed before passing further along compression path 68 to high pressure compressor 66 for a further compression before exiting the compression path 68 at outlet 72 and being transferred to cavern 58.

After compressed air is stored in cavern 58, compressed air can be allowed to enter an inlet 74 of expansion path 76 during the expansion mode of operation (i.e., expansion stage). The compressed air proceeds down the expansion path 76 to turbine system 60, which includes a low pressure turbine 78, an intermediate pressure turbine 80, and a high pressure turbine 82. Due to the configuration of turbine system 60, the compressed air is allowed to expand as it passes therethrough; thus, causing rotation of turbines 78, 80, 82 of turbine system 60 so as to facilitate power generation. The rotation of turbine system 60 causes drive shaft 54 to rotate. In turn, drive shaft 54 drives motor-generator unit 52, causing the unit to function as a generator to produce electricity.

As shown in FIG. 2, ACAES system 50 also includes a multi-stage thermal energy storage (TES) system 84 configured to cool and heat the air passing through the compressor and expansion paths 68, 76 as it is being compressed/expanded by the compressor and turbine systems 56, 60. The multi-stage TES system 84 is comprised of a plurality of individual TES units 86, 88, 90 that may take on a variety of constructions/forms as described above with respect to FIG. 2.

In operation, the multi-stage TES system 84 functions to remove heat from the compressed air during a compression or "charging" stage/mode of operation of ACAES system 50. As air is compressed by compressor system 56 and as it passes along compression path 68 to cavern 58, multi-stage TES system 84 cools the compressed air. That is, before the compressed air is stored in cavern 58, it is passed through multi-stage TES system 84 to remove heat from the compressed air prior to storage in the cavern, so as to protect the integrity thereof. The heat is stored by multi-stage TES system 84, and is later conveyed back to the compressed air during an expansion or "discharging" stage/mode of operation of ACAES system 50. As the compressed air is released from cavern 58 and passes through expansion path 76 to be expanded by turbine system 60, the air is heated as it passes back through multi-stage TES system 84.

According to the embodiment of FIG. 2, the multi-stage TES system 84 includes a first TES unit 86, a second TES unit 88, and a third TES unit 90 that are positioned intermittently along the compression path 68 and the expansion path 76 to provide cooling/heating to air passing therethrough. According to an exemplary embodiment, the compression path 68 is arranged or routed such that air is first directed to first TES unit 86, is subsequently directed to second TES unit 88, and is then subsequently directed to third TES unit 90. Air is brought into compression path 68 through inlet 70 and provided to low pressure compressor 62. Low pressure compressor 62 compresses the air to a first pressure level (i.e., a "low" pressure) and the air is then routed through compression path 68 to first TES unit 86, where the air is cooled. The air then continues through compression path 68 to intermediate pressure compressor 64, where the air is compressed to a second pressure level (i.e., an "intermediate" pressure), and is then routed through compression path 68 to second TES unit 88, where the air is again cooled. The air is finally passed along compression path 68 to high pressure compressor 66, where the air is compressed to a third pressure level (i.e., a "high" pressure), before being routed through compression path 68 to third TES unit 90 for a final cooling before exiting compression path 68 through outlet 72 for storage in cavern 58. Compression path 68 is thus routed such that first TES unit 86 is positioned on compression path 68 between low pressure compressor 62 and intermediate pressure compressor 64, such that second TES unit 88 is positioned on compression path 68 between intermediate pressure compressor 64 and high pressure compressor 66, and such that third TES unit 90 is positioned on compression path 68 downstream of the high pressure compressor 66.

According to an exemplary embodiment, the expansion path 76 is routed such that air is first directed to third TES unit 90, is subsequently directed to first TES unit 86, and is then subsequently directed to second TES unit 88. Air is brought into expansion path 76 from cavern 58 through inlet 74 and provided to third TES unit 90, where the air is heated. The heated air is then passed through expansion path 76 to high pressure turbine 82, which expands the air. The air then continues through expansion path 76 and is directed to first TES unit 86, where the air is again heated before being passed along expansion path 76 for expansion in intermediate pressure turbine 80. Upon expansion in intermediate pressure turbine 80, air passes along expansion path 76 to second TES unit 88, where the air is again heated before being passed along expansion path 76 for expansion in low pressure turbine 78.

Expansion path 76 is thus routed/arranged so as to "switch" the operation or function of the first and second TES units 86, 88. That is, the first TES unit 86 functions as a "low pressure TES unit" and the second TES unit 88 functions as an "intermediate pressure TES unit" during the compression/charging mode of operation, based on routing of compression path 68. During the expansion/discharging mode of operation, the first TES unit 86 functions as an "intermediate pressure TES unit" and the second TES unit 88 functions as a "low pressure TES unit," based on routing of expansion path 76.

The incorporation of three TES units 86, 88, 90 in multi-stage TES system 84, along with the switching of the operation/function of first and second TES units 86, 88 between the charging and discharging modes of operations, results in a peak operating temperature of the TES units 86, 88, 90 being reduced. For example, the operating temperature of first TES unit 86 may be approximately 230° Celsius, the operating temperature of second TES unit 88 may be approximately 280° Celsius, and the operating temperature of third TES unit 90 may be approximately 265° Celsius as compared to temperatures of 420° Celsius were the function of three TES units not reversed, or 650° Celsius were a single TES unit used.

The incorporation of three TES units 86, 88, 90 in multi-stage TES system 84 and the switching of the operation/function of first and second TES units 86, 88 between the charging and discharging modes of operations also results in a reduced operating pressure in the compressor system 56. Operating pressures of the low, intermediate, and high pressure compressors 62, 64, 66 may be 0.6 MPa (6 bar), 0.33 MPa (3.3 bar), and 0.2 MPa (3 bar), for example, as compared to 6 MPa (60 bar) in a single stage compressor system.

While the routing of expansion path 76 in ACAES system 50 is shown and described as routing the air sequentially through the third TES unit 90, first TES unit 86, and second TES unit 88 (i.e., high pressure to low pressure to intermediate pressure), it is recognized that other routings of expansion path 76 are also within the scope of the invention. Thus, expansion path 76 could be routed to pass air sequentially through the first TES unit 86, second TES unit 88, and third TES unit 90 (i.e., high pressure to intermediate pressure to low pressure), for example, according to another embodiment of the invention.

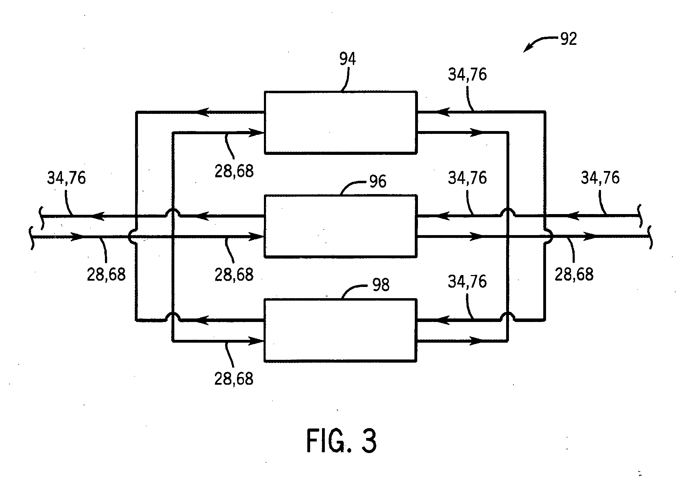

Referring now to FIG. 3, a construction of a TES unit 92, such as those incorporated into multi-stage TES systems 40, 84, is shown according to an embodiment of the invention. The TES unit 92 is constructed of three separate TES subunits 94, 96, 98 that are each connected to compression path 28, 68 and expansion path 34, 76. The TES subunits 94, 96, 98 are arranged in parallel such that air from compression path 28, 68 and expansion path 34, 76 flows equally into each of the TES subunits. The construction of a TES unit 92 from multiple TES subunits 94, 96, 98 functions to further lower temperature in the TES subunits 94, 96, 98 as compared to a TES unit formed of a single outer shell and fill. While TES unit 92 is shown as being formed of three TES subunits 94, 96, 98, it is recognized that a greater or lesser number of subunits could be included in the TES unit 92, according to embodiments of the invention.

It is recognized that embodiments of the invention are not limited to the examples described above. That is, a greater number of compressors and turbines and a greater number of TES units may be employed in an ACAES system, according to embodiments of the invention. The number of compressors desired to efficiently compress air to required operating and storing pressures may vary, as such pressures are highly dependent on the type and depth of air storage device/cavern 18, 58. For example, a pressure range of approximately 2.76 MPa (400 psi) to 6.89 MPa (1000 psi) has been found adequate for a salt dome and aquifer located at a depth of approximately 457 m (1500 feet). The number of compressors required in compressor system 16, 56 is dependent on air pressure and the type and depth of cavern 18, 58, as well as other factors.

The number of TES units will thus also vary based on the number of compressors/turbines employed. For example, four or more TES units may be integrated into an ACAES system to act as intercoolers and reheaters between each stage of compression and expansion in the system. Beneficially, the plurality of TES units provided will reduce the peak operating temperature of each of the TES units such that the temperature range of operation of the TES units will ideally fall between 200° to 360° Celsius.

Therefore, according to one embodiment of the invention, an adiabatic compressed air energy storage (ACAES) system operable in a compression mode to compress air and in an expansion mode to expand air is provided. The ACAES system includes a compressor system configured to compress air supplied thereto, with the compressor system further including a plurality of compressors and a compressor conduit fluidly connecting the plurality of compressors together and having an air inlet and an air outlet. The ACAES system also includes an air storage unit connected to the air outlet of the compressor conduit and configured to store compressed air received from the compressor system and a turbine system configured to expand compressed air supplied thereto from the air storage unit, with the turbine system further including a plurality of turbines and a turbine conduit fluidly connecting the plurality of turbines together and having an air inlet and an air outlet. The ACAES system also includes a plurality of thermal energy storage (TES) units configured to remove thermal energy from compressed air passing through the compressor conduit and return thermal energy to air passing through the turbine conduit, with each of the plurality of TES units being positioned on the compressor conduit along a length thereof between the air inlet and the air outlet of the compressor conduit and on the turbine conduit along a length thereof between the air inlet and the air outlet of the turbine conduit. The compressor conduit and the turbine conduit are arranged such that at least a portion of the plurality of TES units operate at a first pressure state during the compression mode of operation and at a second pressure state different from the first pressure state during the expansion mode of operation.

According to another embodiment of the invention, a method for adiabatic compressed air energy storage (ACAES) includes the steps of supplying air to a compressor system, the compressor system including a plurality of compressor units fluidly connected by a compressor conduit and compressing the air in the compressor system during a compression stage. The method also includes the steps of storing the compressed air in a compressed air storage unit, supplying the compressed air from the compressed air storage unit to a turbine system including a plurality of turbine units fluidly connected by a turbine conduit, and expanding the air in the turbine system during an expansion stage. The method further includes the step of passing the air through a plurality of thermal energy storage (TES) units connected to each of the compressor conduit and the turbine conduit during each of the compression stage and the expansion stage, the plurality of TES units spaced intermittently among the plurality of compressor units and the plurality of turbine units, to cool and heat the air as it passes through the respective compressor conduit and the turbine conduit. The air is routed through the plurality of TES units such that at least a portion of the plurality of TES units operate at a first pressure state during the compression stage and at a second pressure state different from the first pressure state during the expansion stage.

According to yet another embodiment of the invention, an ACAES system includes a compressor system configured to compress air supplied thereto and having a plurality of compressors and a compression path connecting the plurality of compressors and having an,air inlet and an air outlet. The ACAES system also includes an air storage unit connected to the air outlet of the compression path and configured to store compressed air received from the compressor system and a turbine system configured to expand compressed air supplied thereto from the air storage unit, with the turbine system having a plurality of turbines and an expansion path connecting the plurality of turbines and having an air inlet and an air outlet. The ACAES system further includes a multi-stage thermal energy storage (TES) system configured to cool air passing through the compression path during a charging stage and heat air passing through the expansion path during a discharging stage, with the multi-stage TES system comprising a plurality of TES units each configured to operate in a different pressure state. The compression path and the expansion path are routed such that at least a portion of the plurality of TES units operate at a first pressure state during the charging stage and at a second pressure state different from the first pressure state during the discharging stage.

This written description uses examples to disclose the invention, including the best mode, and also to enable any person skilled in the art to practice the invention, including making and using any devices or systems and performing any incorporated methods. The patentable scope of the invention is defined by the claims.

## Claims

1. An adiabatic compressed air energy storage (ACAES) system operable in a compression mode to compress air and in an expansion mode to expand air, the ACAES system comprising:
a compressor system (16) configured to compress air supplied thereto, the compressor system comprising:
a plurality of compressors (22, 24); and
a compressor conduit (28) fluidly connecting the plurality of compressors together and having an air inlet (26) and an air outlet (30);
an air storage unit (18) connected to the air outlet (30) of the compressor conduit (28) and configured to store compressed air received from the compressor system;
a turbine system (20) configured to expand compressed air supplied thereto from the air storage unit (18), the turbine system comprising:
a plurality of turbines (36, 38); and
a turbine conduit (34) fluidly connecting the plurality of turbines together and having an air inlet (32) and an air outlet; and
a plurality of thermal energy storage (TES) units (42, 44) configured to remove thermal energy from compressed air passing through the compressor conduit (28) and return thermal energy to air passing through the turbine conduit (34), each of the plurality of TES units (42, 44) being positioned on the compressor conduit (28) along a length thereof between the air inlet and the air outlet of the compressor conduit and on the turbine conduit along a length thereof between the air inlet and the air outlet of the turbine conduit; the ACAES system **characterised in that**
the compressor conduit (28) and the turbine conduit (34) are arranged such that each TES unit (42, 44) of the plurality of TES units is configured to operate at a first pressure state during the compression mode of operation and at a second pressure state different from the first pressure state during the expansion mode of operation.

2. The ACAES system of claim 1 wherein:
the plurality of compressors comprises a low pressure compressor (22) and a high pressure compressor (24);
the plurality of turbines comprises a low pressure turbine (36) and a high pressure turbine (38); and
the plurality of TES units comprises a first TES unit (42) positioned on the compressor conduit (28) and the turbine conduit (34) and a second TES unit (44) positioned on the compressor conduit (28) and the turbine conduit (34).

3. The ACAES system of claim 2 wherein the compressor conduit (28) is arranged to pass air at a first pressure through the first TES unit (42) and subsequently pass air at a second pressure through the second TES unit (44); and
wherein the turbine conduit (34) is arranged to pass air at the second pressure through the first TES unit (42) and subsequently pass air at the first pressure through the second TES unit (44).

4. The ACAES system of claim 3 wherein the air at the first pressure comprises low pressure air and the air at the second pressure comprises high pressure air, such that the first TES unit (42) receives low pressure air from the compressor conduit and high pressure air from the turbine conduit and such that the second TES unit (44) receives high pressure air from the compressor conduit and low pressure air from the turbine conduit.

5. The ACAES system of claim 1 wherein:
the plurality of compressors comprises a low pressure compressor (62), an intermediate pressure compressor (64), and a high pressure compressor (66);
the plurality of turbines comprises a low pressure turbine (78), an intermediate pressure turbine (80), and a high pressure turbine (82); and
the plurality of TES units comprises a first TES unit (86) positioned on the compressor conduit (68) and the turbine conduit (76), a second TES unit (88) positioned on the compressor conduit and the turbine conduit, and a third TES unit (90) positioned on the compressor conduit and the turbine conduit.

6. The ACAES system of claim 5 wherein the compressor conduit (68) is arranged to pass air at a first pressure through the first TES unit, subsequently pass air at a second pressure through the second TES unit, and subsequently pass air at a third pressure through the third TES unit; and
wherein the turbine conduit (76) is arranged to pass air at the third pressure through the third TES unit, subsequently pass air at the second pressure through the first TES unit, and subsequently pass air at the first pressure through the second TES unit.

7. The ACAES system of claim 6 wherein the air at the first pressure comprises low pressure air, the air at the second pressure comprises intermediate pressure air, and the air at the third pressure comprises high pressure air, such that the first TES unit receives low pressure air from the compressor conduit and intermediate pressure air from the turbine conduit, such that the second TES unit receives intermediate pressure air from the compressor conduit and low pressure air from the turbine conduit, and such that the third TES unit receives high pressure air from the compressor conduit and high pressure air from the turbine conduit.

8. The ACAES system of claim 1 wherein each of the plurality of TES units comprises a plurality of TES subunits connected in parallel to both the compressor conduit and the turbine conduit.

9. The ACAES system of claim 1 wherein each of the plurality of TES units is configured to operate in a temperature range of 200° to 360° Celsius.

10. A method for adiabatic compressed air energy storage (ACAES) comprising:
supplying air to a compressor system (16), the compressor system including a plurality of compressor units (22, 24) fluidly connected by a compressor conduit (28);
compressing the air in the compressor system during a compression stage;
storing the compressed air in a compressed air storage unit (18);
supplying the compressed air from the compressed air storage unit to a turbine system (20), the turbine system including a plurality of turbine units (36, 38) fluidly connected by a turbine conduit;
expanding the air in the turbine system during an expansion stage; and
during each of the compression stage and the expansion stage, passing the air through a plurality of thermal energy storage (TES) units (42, 44) connected to each of the compressor conduit and the turbine conduit, the plurality of TES units spaced intermittently among the plurality of compressor units and the plurality of turbine units, to cool and heat the air as it passes through the respective compressor conduit and the turbine conduit;
wherein the air is routed through the plurality of TES units such that at each TES unit of the plurality of TES units operates at a first pressure state during the compression stage and at a second pressure state different from the first pressure state during the expansion stage.

11. The method of claim 10 wherein passing the air through the plurality of TES units comprises:
passing the air through a first TES unit, subsequently passing the air through a second TES unit, and subsequently passing the air through a third TES unit when passing the air through the compressor conduit, such that low pressure air passes through the first TES unit, intermediate pressure air passes through the second TES unit, and high pressure air passes through the third TES unit; and
passing the air through the third TES unit, subsequently passing the air through the first TES unit, and subsequently passing the air through the second TES unit when passing the air through the turbine conduit, such that high pressure air passes through the third TES unit, intermediate pressure air passes through the first TES unit, and low pressure air passes through the second TES unit.

12. The method of claim 10 wherein compressing the air comprises compressing the air in one of a two-stage compressor system and a three-stage compressor system; and
wherein expanding the air comprises expanding the air in one of a two-stage turbine system and a three-stage turbine system.

## Patentansprüche

1. Adiabatisches Druckluft-Energiespeichersystem (ACAES - Adiabatic Compressed Air Energy Storage), das in einem Kompressionsmodus funktionsfähig ist, um Luft zu komprimieren, und in einem Expansionsmodus, um Luft zu expandieren, wobei das ACAES-System Folgendes umfasst:
ein Kompressorsystem (16), das dafür gestaltet ist, ihm zugeführte Luft zu komprimieren, wobei das Kompressorsystem Folgendes umfasst:
mehrere Kompressoren (22, 24) und
eine Kompressorleitung (28), welche die mehreren Kompressoren in Fluidverbindung miteinander bringt und einen Lufteinlass (26) und einen Luftauslass (30) aufweist,
eine Luftspeichereinheit (18), die an den Luftauslass (30) der Kompressorleitung (28) angeschlossen und dafür konfiguriert ist, komprimierte Luft zu speichern, die vom Kompressorsystem empfangen wurde,
ein Turbinensystem (20), das dafür gestaltet ist, Druckluft zu expandieren, die ihm von der Luftspeichereinheit (18) zugeführt wurde, wobei das Turbinensystem Folgendes umfasst:
mehrere Turbinen (36, 38) und
eine Turbinenleitung (34), welche die mehreren Turbinen in Fluidverbindung miteinander bringt und einen Lufteinlass (32) und einen Luftauslass aufweist, und
mehrere Wärmeenergie-Speichereinheiten (TES - Thermal Energy Storage) (42,44), die dafür gestaltet sind, Wärmeenergie aus der Druckluft zu entfernen, die durch die Kompressorleitung (28) strömt, und Wärmeenergie zur Luft zurückzuführen, die durch die Turbinenleitung (34) strömt, wobei jede der mehreren TES-Einheiten (42, 44) entlang der Kompressorleitung (28) zwischen dem Lufteinlass und dem Luftauslass der Kompressorleitung und entlang der Turbinenleitung zwischen dem Lufteinlass und dem Luftauslass der Turbinenleitung angeordnet ist,
wobei das ACAES-System **dadurch gekennzeichnet** ist, dass die Kompressorleitung (28) und die Turbinenleitung (34) derart angeordnet sind, dass jede TES-Einheit (42, 44) der mehreren TES-Einheiten dafür gestaltet ist, während des Kompressionsbetriebsmodus in einem ersten Druckzustand zu arbeiten und während des Expansionsbetriebsmodus in einem zweiten Druckzustand, der sich vom ersten Druckzustand unterscheidet.

2. ACAES-System nach Anspruch 1, wobei:
die mehreren Kompressoren einen Niederdruckkompressor (22) und einen Hochdruckkompressor (24) umfassen,
die mehreren Turbinen eine Niederdruckturbine (36) und eine Hochdruckturbine (38) umfassen und
die mehreren TES-Einheiten eine erste TES-Einheit (42) umfassen, die an der Kompressorleitung (28) und der Turbinenleitung (34) angeordnet ist, und eine zweite TES-Einheit (44), die an der Kompressorleitung (28) und der Turbinenleitung (34) angeordnet ist.

3. ACAES-System nach Anspruch 2, wobei die Kompressorleitung (28) dafür angeordnet ist, Luft mit einem ersten Druck durch die erste TES-Einheit (42) zu leiten und danach Luft mit einem zweiten Druck durch die zweite TES-Einheit (44) zu leiten, und
wobei die Turbinenleitung (34) dafür angeordnet ist, Luft mit dem zweiten Druck durch die erste TES-Einheit (42) zu leiten und danach Luft mit dem ersten Druck durch die zweite TES-Einheit (44) zu leiten.

4. ACAES-System nach Anspruch 3, wobei die Luft mit dem ersten Druck Niederdruckluft umfasst und die Luft mit dem zweiten Druck Hochdruckluft umfasst, so dass die erste TES-Einheit (42) Niederdruckluft von der Kompressorleitung und Hochdruckluft von der Turbinenleitung empfängt und dass die zweite TES-Einheit (44) Hochdruckluft von der Kompressorleitung und Niederdruckluft von der Turbinenleitung empfängt.

5. ACAES-System nach Anspruch 1, wobei:
die mehreren Kompressoren einen Niederdruckkompressor (62), einen Mitteldruckkompressor (64) und einen Hochdruckkompressor (66) umfassen,
die mehreren Turbinen eine Niederdruckturbine (78), eine Mitteldruckturbine (80) und eine Hochdruckturbine (82) umfassen und
die mehreren TES-Einheiten eine erste TES-Einheit (86) umfassen, die an der Kompressorleitung (68) und der Turbinenleitung (76) angeordnet ist, eine zweite TES-Einheit (88), die an der Kompressorleitung und der Turbinenleitung angeordnet ist, und eine dritte TES-Einheit (90), die an der Kompressorleitung und der Turbinenleitung angeordnet ist.

6. ACAES-System nach Anspruch 5, wobei die Kompressorleitung (68) dafür angeordnet ist, Luft mit einem ersten Druck durch die erste TES-Einheit zu leiten und danach Luft mit einem zweiten Druck durch die zweite TES-Einheit zu leiten, und danach Luft mit einem dritten Druck durch die dritte TES-Einheit zu leiten, und
wobei die Turbinenleitung (76) dafür angeordnet ist, Luft mit dem dritten Druck durch die dritte TES-Einheit zu leiten, danach Luft mit dem zweiten Druck durch die erste TES-Einheit zu leiten und danach Luft mit dem dritten Druck durch die zweite TES-Einheit zu leiten.

7. ACAES-System nach Anspruch 6, wobei die Luft mit dem ersten Druck Niederdruckluft umfasst, die Luft mit dem zweiten Druck Mitteldruckluft und die Luft mit dem dritten Druck Hochdruckluft umfasst, so dass die erste TES-Einheit Niederdruckluft von der Kompressorleitung und Mitteldruckluft von der Turbinenleitung empfängt, dass die zweite TES-Einheit Mitteldruckluft von der Kompressorleitung und Niederdruckkluft von der Turbinenleitung empfängt und dass die dritte TES-Einheit Hochdruckluft von der Kompressorleitung und Hochdruckluft von der Turbinenleitung empfängt.

8. ACAES-System nach Anspruch 1, wobei jede der mehreren TES-Einheiten mehrere TES-Untereinheiten umfasst, die parallel sowohl an die Kompressor- als auch an die Turbinenleitung angeschlossen sind.

9. ACAES-System nach Anspruch 1, wobei jede der mehreren TES-Einheiten dafür gestaltet ist, in einem Temperaturbereich von 200 bis 360 °C zu arbeiten.

10. Verfahren zur adiabatischen Druckluft-Energiespeicherung (ACAES), Folgendes umfassend:
Zuführen von Luft zu einem Kompressorsystem (16), wobei das Kompressorsystem mehrere Kompressoreinheiten (22, 24) umfasst, die mittels einer Kompressorleitung (28) in Fluidverbindung stehen,
Komprimieren der Luft im Kompressorsystem während einer Kompressionsphase,
Speichern der Druckluft in einer Druckluftspeichereinheit (18),
Führen der Druckluft von der Druckluftspeichereinheit zu einem Turbinensystem (20), wobei das Turbinensystem mehrere Turbineneinheiten (36, 38) umfasst, die mittels einer Turbinenleitung in Fluidverbindung stehen,
Expandieren der Luft im Turbinensystem während einer Expansionsphase und
Leiten der Luft durch mehrere Wärmeenergie-Speichereinheiten (TES) (42, 44), die jeweils an die Kompressor- und die Turbinenleitung angeschlossen sind, während jeweils der Kompressions- und der Expansionsphase, wobei die mehreren TES-Einheiten zwischen den mehreren Kompressoreinheiten und den mehreren Turbineneinheiten angeordnet sind, um Luft zu kühlen und zu erwärmen, die durch die Kompressorleitung beziehungsweise die Turbinenleitung geleitet wird,
wobei die Luft derart durch die mehreren TES-Einheiten gelenkt wird, dass jede TES-Einheit der mehreren TES-Einheiten während der Kompressionsphase in einem ersten Druckzustand arbeitet und während der Expansionsphase in einem zweiten Druckzustand, der sich vom ersten Druckzustand unterscheidet.

11. Verfahren nach Anspruch 10, wobei das Leiten der Luft durch die mehreren TES-Einheiten Folgendes umfasst:
Leiten der Luft durch eine erste TES-Einheit, danach Leiten der Luft durch eine zweite TES-Einheit und danach Leiten der Luft durch eine dritte TES-Einheit, wenn die Luft durch die Kompressorleitung geleitet wird, so dass Niederdruckluft durch die erste TES-Einheit, Mitteldruckluft durch die zweite TES-Einheit und Hochdruckluft durch die dritte TES-Einheit strömt, und
Leiten der Luft durch die dritte TES-Einheit, danach Leiten der Luft durch die erste TES-Einheit und danach Leiten der Luft durch die zweite TES-Einheit, wenn die Luft durch die Turbinenleitung geleitet wird, so dass Hochdruckluft durch die dritte TES-Einheit, Mitteldruckluft durch die erste TES-Einheit und Niederdruckluft durch die zweite TES-Einheit strömt.

12. Verfahren nach Anspruch 10, wobei das Komprimieren der Luft das Komprimieren der Luft im einem Zwei-Phasen-Kompressorsystem oder in einem Drei-Phasen-Kompressorsystem umfasst und
wobei das Expandieren der Luft das Expandieren der Luft in einem Zwei-Phasen-Turbinensystem oder in einem Drei-Phasen-Turbinensystem umfasst.

## Revendications

1. Système de stockage adiabatique d'énergie d'air comprimé (ACAES) susceptible d'opérer en mode de compression pour comprimer de l'air et en mode d'expansion pour dilater de l'air, le système ACAES comprenant :
un système de compresseurs (16) configuré pour comprimer l'air qui lui est fourni, le système de compresseurs comprenant :
une pluralité de compresseurs (22, 24) ; et
un conduit de compresseurs (28) raccordant en communication fluidique la pluralité de compresseurs conjointement et ayant une entrée d'air (26) et une sortie d'air (30) ;
une unité de stockage d'air (18) raccordée à la sortie d'air (30) du conduit de compresseurs (28) et configurée pour stocker de l'air comprimé reçu du système de compresseurs ;
un système de turbines (20) configuré pour dilater l'air comprimé qui lui est fourni par l'unité de stockage d'air (18), le système de turbines comprenant :
une pluralité de turbines (36, 38) ; et
un conduit de turbines (34) raccordant en communication fluidique la pluralité de turbines conjointement et ayant une entrée d'air (32) et une sortie d'air ; et
une pluralité d'unités de stockage d'énergie thermique (TES) (42, 44) configurées pour éliminer l'énergie thermique provenant de l'air comprimé passant à travers le conduit de compresseurs (28) et renvoyer l'énergie thermique à l'air passant à travers le conduit de turbines (34), chacune de la pluralité d'unités TES (42, 44) étant positionnée sur le conduit de compresseurs (28) sur sa longueur entre l'entrée d'air et la sortie d'air du conduit de compresseurs et sur le conduit de turbines sur sa longueur entre l'entrée d'air et la sortie d'air du conduit de turbines ; le système ACAES étant **caractérisé en ce que** :
le conduit de compresseurs (28) et le conduit de turbines (34) sont aménagés de sorte que chaque unité TES (42, 44) de la pluralité d'unités TES soit configurée pour opérer à un premier état de pression au cours du mode de fonctionnement en compression et à un second état de pression différent du premier état de pression au cours du mode de fonctionnement en expansion.

2. Système ACAES selon la revendication 1, dans lequel :
la pluralité de compresseurs comprennent un compresseur à basse pression (22) et un compresseur à haute pression (24) ;
la pluralité de turbines comprennent une turbine à basse pression (36) et une turbine à haute pression (38) ; et
la pluralité d'unités TES comprennent une première unité TES (42) positionnée sur le conduit de compresseurs (28) et le conduit de turbines (34) et une seconde unité TES (44) positionnée sur le conduit de compresseurs (28) et le conduit de turbines (34).

3. Système ACAES selon la revendication 2, dans lequel le conduit de compresseurs (28) est aménagé pour faire passer de l'air à une première pression à travers la première unité TES (42) et pour faire ensuite passer de l'air à une seconde pression à travers la seconde unité TES (44) ; et
dans lequel le conduit de turbines (34) est aménagé pour faire passer de l'air à la seconde pression à travers la première unité TES (42) et pour faire ensuite passer de l'air à la première pression à travers la seconde unité TES (44).

4. Système ACAES selon la revendication 3, dans lequel l'air à la première pression comprend de l'air à basse pression et l'air à la seconde pression comprend de l'air à haute pression de sorte que la première unité TES (42) reçoive de l'air à basse pression du conduit de compresseurs et de l'air à haute pression du conduit de turbines et de sorte que la seconde unité TES (44) reçoive de l'air à haute pression du conduit de compresseurs et de l'air à basse pression du conduit de turbines.

5. Système ACAES selon la revendication 1, dans lequel :
la pluralité de compresseurs comprennent un compresseur à basse pression (62), un compresseur à pression intermédiaire (64) et un compresseur à haute pression (66) ;
la pluralité de turbines comprennent une turbine à basse pression (78), une turbine à pression intermédiaire (80) et une turbine à haute pression (82) ; et
la pluralité d'unités TES comprend une première unité TES (86) positionnée sur le conduit de compresseurs (68) et le conduit de turbines (76), une deuxième unité TES (88) positionnée sur le conduit de compresseurs et le conduit de turbines et une troisième unité TES (90) positionnée sur le conduit de compresseurs et le conduit de turbines.

6. Système ACAES selon la revendication 5, dans lequel le conduit de compresseurs (68) est aménagé pour faire passer de l'air à une première pression à travers la première unité TES, ensuite pour faire passer de l'air à une deuxième pression à travers la deuxième unité TES, puis pour faire passer de l'air à une troisième pression à travers la troisième unité TES ; et
dans lequel le conduit de turbines (76) est aménagé pour faire passer de l'air à la troisième pression à travers la troisième unité TES, ensuite pour faire passer de l'air à la deuxième pression à travers la première unité TES, puis pour faire passer de l'air à la première pression à travers la deuxième unité TES.

7. Système ACAES selon la revendication 6, dans lequel l'air à la première pression comprend de l'air à basse pression, l'air à la deuxième pression comprend de l'air à pression intermédiaire et l'air à la troisième pression comprend de l'air à haute pression de sorte que la première unité TES reçoive de l'air à basse pression du conduit de compresseurs et de l'air à pression intermédiaire du conduit de turbines, de sorte que la deuxième unité TES reçoive de l'air à pression intermédiaire du conduit de compresseurs et de l'air à basse pression du conduit de turbines et de sorte que la troisième unité TES reçoive de l'air à haute pression du conduit de compresseurs et de l'air à haute pression du conduit de turbines.

8. Système ACAES selon la revendication 1, dans lequel chacune de la pluralité d'unités TES comprend une pluralité de sous-unités TES raccordées en parallèle à la fois au conduit de compresseurs et au conduit de turbines.

9. Système ACAES selon la revendication 1, dans lequel chacune de la pluralité d'unités TES est configurée pour opérer dans une plage de températures de 200 à 360 ° Celsius.

10. Procédé pour le stockage adiabatique d'air comprimé (ACAES), comprenant les étapes consistant à :
fournir de l'air à un système de compresseurs (16), le système de compresseurs comprenant une pluralité d'unités de compresseur (22, 24) raccordées en communication fluidique par un conduit de compresseurs (28) ;
comprimer l'air du système de compresseurs au cours d'un stade de compression ;
stocker l'air comprimé dans l'unité de stockage d'air comprimé (18) ;
fournir l'air comprimé provenant de l'unité de stockage d'air comprimé à un système de turbines (20), le système de turbines comprenant une pluralité d'unités de turbine (36, 38) raccordées en communication fluidique par un conduit de turbines ;
dilater l'air dans le système de turbines au cours d'un stade d'expansion ; et,
au cours de chacun du stade de compression et du stade d'expansion, faire passer de l'air à travers une pluralité d'unités de stockage d'énergie thermique (TES) (42, 44) raccordées à chacun du conduit de compresseurs et du conduit de turbines, la pluralité d'unités TES étant espacées de manière intermittente entre la pluralité d'unités de compresseur et la pluralité d'unités de turbine pour refroidir et chauffer l'air à mesure qu'il passe à travers le conduit de compresseurs et le conduit de turbines respectifs ;
dans lequel l'air est acheminé à travers la pluralité d'unités TES de sorte que chaque unité TES de la pluralité d'unités TES opère à un premier état de pression au cours du stade de compression et à un second état de pression différent du premier état de pression au cours du stade d'expansion.

11. Procédé selon la revendication 10, dans lequel le passage de l'air à travers la pluralité d'unités TES comprend les étapes consistant à :
faire passer l'air à travers la première unité TES, puis faire passer l'air à travers une deuxième unité TES, ensuite faire passer l'air à travers une troisième unité TES lors du passage de l'air à travers le conduit de compresseurs de sorte que de l'air à basse pression passe à travers la première unité TES, que de l'air à pression intermédiaire passe à travers la deuxième unité TES et que de l'air à haute pression passe à travers la troisième unité TES ; et
faire passer l'air à travers la troisième unité TES, puis faire passer l'air à travers la première unité TES, ensuite faire passer l'air à travers la deuxième unité TES lors du passage de l'air à travers le conduit de turbines de sorte que de l'air à haute pression passe à travers la troisième unité TES, que de l'air à pression intermédiaire passe à travers la première unité TES et que de l'air à basse pression passe à travers la deuxième unité TES.

12. Procédé selon la revendication 10, dans lequel la compression de l'air comprend la compression de l'air dans l'un d'un système de compresseurs à deux étages et d'un système de compresseurs à trois étages ; et
dans lequel l'expansion de l'air comprend l'expansion de l'air dans l'un d'un système de turbines à deux étages et d'un système de turbines à trois étages.
